# EUROPÄISCHE PATENTANMELDUNG

(11) **EP 3 978 992 A1**
(43) Veröffentlichungstag der Anmeldung: **06.04.2022**
(21) Anmeldenummer: 21199908.1
(22) Anmeldetag: 29.09.2021
(51) Int. Cl.: G02B 27/01

(54) **GRUNDSTEUERUNG EINES HEAD-MOUNTED DISPLAY DURCH STEUERN DER STELLUNG EINES BÜGELS EINES BRILLENRAHMENS**

(30) Priorität: 30.09.2020 DE 102020212392
(71) Anmelder: tooz technologies GmbH, 73430 Aalen (DE)
(72) Erfinder: Yliniemelä, Marko Kristian, 90650 Oulu (FI)
(74) Vertreter: Carlsohn, Marc René

(57) **Zusammenfassung**

Die Erfindung betrifft ein Verfahren zum Steuern einer Grundfunktion eines HMD, wobei wenigstens ein Sensor erfasst, ob sich wenigstens ein Bügel des Brillenrahmens des HMD in einer ausgeklappten Stellung befindet, und wobei die Steuerung der Grundfunktion des HMD von dieser Erfassung abhängig ist.

Die Erfindung betrifft weiterhin ein HMD, das nach dem Verfahren steuerbar ist.

## Beschreibung

Die Erfindung betrifft ein Verfahren zum Steuern einer Grundfunktion eines HMD, wobei wenigstens ein Sensor erfasst, ob sich wenigstens ein Bügel des Brillenrahmens des HMD in einer ausgeklappten Stellung befindet, und wobei die Steuerung der Grundfunktion des HMD von dieser Erfassung abhängig ist.

Die Erfindung betrifft weiterhin ein HMD, das nach dem Verfahren steuerbar ist.

### Hintergrund:

Head-Mounted Displays (HMDs, am Kopf zu montierende visuelle Anzeigevorrichtungen) und insbesondere Datenbrillen verwenden für ein Benutzereingabeverfahren üblicherweise zweckgebundene Tasten oder eine berührungsempfindliche Fläche. Eines der typischen Eingabeverfahren besteht im Ein- und Ausschalten der Brille. Separate Tasten oder berührungsempfindliche Flächen erfordern zusätzliche Hardware, und ihre Unterbringung in einem Rahmen stellt eine Herausforderung dar. Insbesondere ist es wünschenswert, grundlegende Eingaben wie Ein- und Ausschalten und/oder Energieverwaltung durch ein einfach umsetzbares Verfahren umzusetzen.

### Ziel der Erfindung:

Das Ziel der Erfindung besteht darin, ein Verfahren zum Steuern einer Grundfunktion eines HMD bereitzustellen sowie ein HMD bereitzustellen, das durch das Verfahren steuerbar ist, die die Nachteile des Stands der Technik nicht aufweisen.

Insbesondere besteht ein Ziel der Erfindung darin, ein Verfahren zum Steuern von Grundfunktionen eines HMD bereitzustellen, das einfach und kostengünstig umsetzbar ist, praktisch ist, mechanisch und elektronisch robust ist, für den Benutzer sehr intuitiv ist und das auch unter schwierigen Umständen realisiert werden kann. Ein weiteres Ziel der Erfindung besteht darin, ein HMD bereitzustellen, das durch das Verfahren steuerbar ist, das einfach und kostengünstig herzustellen ist, robust ist und eine einfache und intuitive Steuerung einer Grundfunktion ermöglicht.

### Kurze Darstellung der Erfindung:

Das Ziel wird durch die Eigenschaften der Hauptansprüche gelöst. Bevorzugte Ausführungsformen der Erfindung sind in den abhängigen Ansprüchen beschrieben.

In einem Aspekt betrifft die Erfindung ein Verfahren zum Steuern einer Grundfunktion eines Head-Mounted Displays. Die Vorrichtung schließt einen Brillenrahmen ein, der ein Brillengestell und zwei klappbare Bügel umfasst. Das Verfahren umfasst die Schritte einer Erfassung, durch wenigstens einen Sensor, ob sich wenigstens ein Bügel in einer ausgeklappten Stellung befindet, und einer Steuerung der Grundfunktion des Head-Mounted Displays in Abhängigkeit von der Erfassung.

Die Erfindung kann z. B. ein Verfahren umfassen, um den Leistungsmodus von Datenbrillen zu steuern. Ist beispielsweise der linke Bügel des Brillenrahmens ausgeklappt, befindet sich die Datenbrille in einem Einschaltmodus. Wird, bei diesem Beispiel, der linke Bügel eingeklappt bzw. eingezogen, befindet sich die Datenbrille in einem Ausschaltmodus. Abhängig von der Ausführungsform kann dieses Verfahren zum Steuern des Leistungsmodus unabhängig vom Zustand des anderen Bügels, z. B. in diesem Fall des rechten Bügels, umgesetzt werden. Die Erfassung, ob der linke Bügel ausgeklappt ist oder nicht kann beispielsweise durch einen einfachen elektromechanischen Schalter realisiert werden, der als Einschalter fungiert, wenn der Bügel ausgeklappt wird, und als Ausschalter fungiert, wenn der Bügel eingeklappt wird. Der Schalter kann z. B.an einer vorgegebenen Stellung des Bügels, die sich zwischen diesen äußeren Stellungen befindet, beispielsweise auf halber Strecke zwischen beiden Stellungen oder kurz vor dem Erreichen einer (vollständig) ausgeklappten Stellung, zwischen Ein und Aus umschalten.

Vorzugsweise ist der Brillenrahmen für eine wenigstens vorübergehende Befestigung des Systems am Kopf eines Benutzers ausgelegt und umfasst eine Funktionseinheit, die eine visuelle Datenausgabe einschließt, die mit dem Brillenrahmen verbunden oder an diesem angebracht ist. Fachleute wissen, dass Brillenrahmen üblicherweise für eine vorübergehende Befestigung eines HMD am Kopf eines Benutzers, insbesondere entlang der Schläfen bzw. hinter den Ohren, verwendet werden. Zu diesem Zweck sind vorzugsweise zwei Brillenbügel, ein erster und ein zweiter (pro Seite des Kopfes und/oder pro Ohr je einer), im Brillenrahmen enthalten.

Der Brillenrahmen umfasst ein Gestell. Das Gestell ist vorzugsweise der Teil des Brillenrahmens, an dem eine Funktionseinheit und insbesondere eine visuelle Datenausgabe des Head-Mounted Display (HMD) angebracht ist. Im Fall von Datenbrillen können beispielsweise der Brillenrahmen und insbesondere das Gestell den allgemeinen Umriss aufweisen, der von "klassischen" Brillen, die als Sehhilfe verwendet werden, bekannt ist.

Brillenbügel stellen vorzugsweise eine Verbindung zwischen dem Gestell und dem Kopf bzw. den Schläfen des Trägers bereit. Sie sind üblicherweise so ausgelegt, dass sie einen festen Sitz des HMD sicherstellen.

Aus praktischen Gründen sind Bügel klappbar, so dass das HMD beispielsweise für einen Transport des HMD, wenn es nicht getragen wird (beispielsweise in einer Kiste oder einem Etui) in eine kompakte Stellung gebracht werden kann. Hierfür können die Bügel am Gestell mittels kleiner Scharniere angebracht sein.

Die Bügel können unterschiedlicher Art sein, wie Fachleuten bekannt ist. Die Art kann beispielsweise entsprechend der Umstände, während derer das HMD getragen wird, gewählt werden. Die Auswahl kann aus der Gruppe erfolgen, die Schläfenbügel (skull temples), Steckbügel (library temples), zwischen Schläfenbügeln und Steckbügeln umwandelbare Bügel (convertible temples) und Gespinst-, Sport- oder Spiralbügel (riding bow temples bzw. comfort cable temples) umfasst.

Fachleute wissen, dass ein Brillenrahmen eines HMD nicht notwendigerweise genau die gleiche Form wie klassische für Sehkorrektur verwendete Brillen aufweisen muss. Die genaue Konstruktion kann stattdessen von der Art des HMD, das realisiert wurde, abhängen (siehe nachstehend die unterschiedlichen Arten). Trotz der möglichen Abweichungen umfasst ein Brillenrahmen jedoch vorzugsweise ein Gestell, das an der visuellen Datenausgabe/Funktionseinheit des HMD angebracht ist, und klappbare Bügel, die mit dem Gestell klappbar verbunden sind, die verwendet werden, um das HMD vorübergehend am Kopf des Benutzers zu befestigen.

Ein Head-Mounted Display ist vorzugsweise eine technische Vorrichtung, die am Kopf eines Benutzers und insbesondere in der Nähe der Augen eines Benutzers getragen werden kann. Sie kann vorzugsweise mit einer technischen Vorrichtung mit einer zweckgebundenen Funktion für den Benutzer, beispielsweise der Anzeige, Sammlung und/oder Verarbeitung von Daten, versehen sein.

Das Head-Mounted Display (HMD) umfasst insbesondere so genannte Datenbrillen.

Vorzugsweise umfasst das HMD eine visuelle Datenausgabe, beispielsweise eine Anzeigevorrichtung, und/oder einen Projektor zum Projizieren von Daten auf (transparente) Brillengläser des HMD, die sich vor den Augen eines Benutzers des HMD befinden, wenn dieses getragen wird. Eine visuelle Datenausgabe, wie in diesem Dokument verwendet, kann mit einer Funktionseinheit und/oder Funktionseinheit, die eine visuelle Datenausgabe umfasst, synonym sein.

Es kann bevorzugt sein, dass das HMD eine Funktionseinheit umfasst. Funktionseinheit, wie in diesem Dokument verwendet, kann mit einer Funktionseinheit, die eine visuelle Datenausgabe umfasst, oder lediglich einer visuellen Datenausgabe synonym sein.

Eine Funktionseinheit beschreibt vorzugsweise eine Einheit, die Funktionen umfasst, die zu einer Dateneingabe, einer Datenausgabe und/oder einer Datenverarbeitung in Beziehung stehen. Sie kann eine Datenschnittstelle für Dateneingabe und/oder Datenausgabe umfassen. Sie kann Funktionen eines Smartphones umfassen. Sie kann eine Verarbeitungseinheit und/oder einen Computer umfassen. Die Funktionseinheit umfasst insbesondere eine visuelle Datenausgabe, beispielsweise eine Anzeigevorrichtung und/oder einen Projektor. Die Funktionseinheit kann eine Schnittstelle zur Kommunikation mit einer externen elektronischen Vorrichtung, beispielsweise einem Smartphone und/oder einem Computer, umfassen. Dementsprechend kann die Funktionsvorrichtung die elektronische Vorrichtung ergänzen, sie kann insbesondere die Dateneingabe- und/oder Datenausgabefähigkeiten der elektronischen Vorrichtung ergänzen und/oder sie kann eine Steuerung der Vorrichtung wenigstens teilweise ermöglichen. Eine Funktionseinheit ist vorzugsweise eine elektronische oder optoelektronische Funktionseinheit. Insbesondere sind optische und/oder elektronische Komponenten eingeschlossen, damit die Einheit wie vorstehend aufgeführt funktioniert.

Die Funktionseinheit, die eine visuelle Datenausgabe umfasst, ist insbesondere für den Benutzer transparent, so dass er/sie über die visuelle Datenausgabe hinweg und/oder durch diese hindurch sehen kann, während gleichzeitig Daten angezeigt werden können. Dies kann beispielsweise durch einen Projektor erreicht werden, der die Daten auf transparente Brillengläser und/oder transparente Brillengläser mit optischen Strukturen, die ermöglichen, dass Licht geführt und/oder angezeigt wird, ohne dass die allgemeine Transparenz für den Benutzer beeinträchtigt ist, projiziert.

Die Steuerung der Grundfunktion wird durch eine Erfassung, ob sich wenigstens ein Bügel (z. B. der erste Bügel) in einer ausgeklappten Stellung befindet, durch wenigstens einen Sensor umgesetzt. Das kann insbesondere bedeuten, dass die Grundfunktion durch das Erfassen, dass sich der wenigstens eine (z. B. der erste) Bügel in einer ausgeklappten Stellung befindet, ausgelöst wird. Dass sich wenigstens ein Bügel in einer ausgeklappten Stellung befindet stellt eine Voraussetzung für das Tragen des HMD durch den Benutzer dar. Üblicherweise wird das HMD nur dann verwendet, wenn es vom Benutzer getragen wird. Somit kann das Auslösen der Grundfunktion, wenn sich wenigstens ein Bügel in einer ausgeklappten Stellung befindet, eine sehr intuitive und ressourcenfreundliche Steuerung des HMD umsetzen.

Ein Bügel kann ausdrücklich ein erster Bügel sein. Ein erster Bügel kann vorzugsweise ein spezifischer der beiden Bügel, z. B. ein linker Bügel oder ein rechter Bügel, sein. Linker und rechter, wie in diesem Dokument verwendet, sind vorzugsweise als linker und rechter aus der Perspektive eines Benutzers, der das HMD trägt, definiert.

Ein zweiter Bügel ist vorzugsweise ein spezifischer Bügel, der nicht der erste Bügel ist. Wenn der erste Bügel ein linker Bügel ist, ist der zweite Bügel vorzugsweise ein rechter Bügel. Wenn der erste Bügel ein rechter Bügel ist, ist der zweite Bügel vorzugsweise ein linker Bügel.

Eine Erfassung, ob sich wenigstens ein Bügel in einer ausgeklappten Stellung befindet, bezieht sich vorzugsweise auf eine Erfassung, ob sich nicht weniger als ein Bügel in einer ausgeklappten Stellung befindet. Sie kann sich somit vorzugsweise auf eine Erfassung, ob sich ein Bügel in einer ausgeklappten Stellung (z. B. ein erster Bügel oder ein zweiter Bügel) befindet, beziehen. Dies kann sich vorzugsweise auf einen beliebigen der Bügel beziehen, es kann sich vorzugsweise aber auch auf einen bestimmten Bügel (z. B. wenigstens den ersten Bügel) beziehen. Eine Erfassung, ob sich nicht weniger als ein Bügel in einer ausgeklappten Stellung befindet, kann sich vorzugsweise auch darauf beziehen, ob sich beide (z. B. der erste und der zweite Bügel) in einer ausgeklappten Stellung befinden.

Wenigstens ein erster Bügel bedeutet vorzugsweise nicht weniger als ein erster Bügel. Dies kann sich somit entweder auf nur einen ersten Bügel oder auf sowohl den ersten als auch den zweiten Bügel beziehen.

Es kann bevorzugt sein, dass die Grundfunktion durch die Erfassung, dass sich der wenigstens eine Bügel in einer ausgeklappten Stellung befindet, ausgelöst wird.

Es kann auch bevorzugt sein, dass die Grundfunktion durch die Erfassung, dass sich der wenigstens eine Bügel nicht in einer ausgeklappten Stellung befindet, ausgelöst wird.

Die ausgeklappte Stellung kann vorzugsweise eine vollständig ausgeklappte Stellung, in der z. B. der Bügel im Wesentlichen nicht weiter ausgeklappt werden kann, umfassen.

Die ausgeklappte Stellung kann auch eine teilweise ausgeklappte Stellung, die weiter als die (vollständig) eingeklappte Stellung ausgeklappt, aber noch nicht vollständig ausgeklappt ist, umfassen.

Es wird bevorzugt, dass die Erfassung, ob sich wenigstens ein Bügel (z. B. der erste Bügel) in einer ausgeklappten Stellung befindet, zudem implizit die Erfassung umfasst, ob sich wenigstens ein Bügel (z. B. der erste Bügel) nicht in einer ausgeklappten Stellung befindet, insbesondere ob er sich in einer eingeklappten Stellung befindet. Insbesondere ergibt eine Erfassung, ob sich wenigstens ein Bügel (z. B. der erste Bügel) in einer ausgeklappten Stellung befindet, die ein negatives Ergebnis ergibt, das Ergebnis, dass sich der wenigstens eine Bügel (z. B. der erste Bügel) nicht in einer ausgeklappten Stellung befindet.

Es ist insbesondere bevorzugt, dass das Ergebnis der Erfassung binär ist. Insbesondere ergibt die Erfassung entweder, dass sich wenigstens ein Bügel (z. B. der erste Bügel) in einer ausgeklappten Stellung befindet oder dass er sich nicht in einer ausgeklappten Stellung befindet. Vorzugsweise wird die Grundfunktion in Abhängigkeit vom binären Ergebnis und auf eine Weise, die für einen Benutzer vorhersehbar oder ihm bekannt ist, gesteuert. Beispielsweise kann eine Grundfunktion ein Leistungsmodus (z. B. entweder Einschalten oder Ausschalten) des HMD sein, bei dem bei der Erfassung, dass sich wenigstens ein Bügel (z. B. der erste Bügel) in einer ausgeklappten Stellung befindet, der Einschaltmodus ausgelöst (oder fortgesetzt) wird und bei dem bei der Erfassung, dass sich wenigstens ein Bügel (z. B. der erste Bügel) nicht in einer ausgeklappten Stellung befindet, der Ausschaltmodus ausgelöst (oder fortgesetzt) wird.

Eine Erfassung kann vorzugsweise eine regelmäßige Messung, ob sich wenigstens ein Bügel (z. B. der erste Bügel) in einer ausgeklappten Stellung (oder nicht) befindet, umfassen.

Es kann zudem bevorzugt sein, dass eine Erfassung lediglich Messungen umfasst, die auf eine Änderung der Stellung von wenigstens einem Bügel (z. B. dem ersten Bügel), z. B. einer Änderung der Stellung von einem nicht ausgeklappten Zustand in einen ausgeklappten Zustand oder umgekehrt, schließen lassen.

Die Erfassung kann insbesondere den ausgeklappten Zustand nur des ersten Bügels umfassen, wobei der erste Bügel vorzugsweise ein spezifischer Bügel ist. Dies bedeutet vorzugsweise, dass die Stellung (ausgeklappt oder eingeklappt) lediglich des ersten Bügels erfasst und/oder für die Grundsteuerung des HMD berücksichtigt wird. Der erste Bügel kann beispielsweise der linke Bügel des HMD aus der Perspektive des Benutzers, wenn er/sie das HMD trägt, sein. Dies würde beispielsweise bedeuten, dass nur wenn erfasst wird, dass sich der linke Bügel in einem ausgeklappten Zustand befindet, die tragbare Vorrichtung in einen Einschaltmodus (alternativ einen Ausschaltmodus) gesteuert wird.

Es kann auch bevorzugt sein, dass der erste Bügel der rechte Bügel ist. Dann wird nur der ausgeklappte Zustand oder die ausgeklappte Stellung des rechten Bügels für eine Steuerung der Grundfunktion berücksichtigt.

Dieses Verfahren ist einfach, effizient und kostengünstig umzusetzen, da vorteilhafterweise nur eine Messung (vorzugsweise durch nur einen Sensor) für nur einen einzigen Bügel realisiert werden muss. Es ist vorteilhafterweise ausreichend, das Ausklappen von nur einem ersten Bügel zu erfassen, da in jedem Fall beide Bügel ausgeklappt werden müssen, damit das HMD vom Benutzer getragen werden kann, so dass der erste ausgeklappt sein wird, wenn das HMD getragen wird.

Es kann weiterhin bevorzugt sein, dass die Grundsteuerung von der ausgeklappten Stellung sowohl des ersten als auch des zweiten Bügels abhängig ist. Dies würde beispielsweise bedeuten, dass die Grundsteuerung des HMD von der Erfassung eines Ausklappens beider Bügel, die sich gleichzeitig in einer ausgeklappten Stellung befinden, abhängig ist. Beispielsweise müssten sich beide Bügel in einer ausgeklappten Stellung befinden, um das HMD einzuschalten (oder alternativ auszuschalten). Diese Ausführungsform ist einfach anzuwenden und im Hinblick auf ein unbeabsichtigtes Ausklappen eines Bügels oder eines Ausklappens, das nicht in der Absicht zum Tragen des HMD erfolgt ist, besonders robust.

Alternativ wird die Stellung (ausgeklappt oder nicht) beider Bügel erfasst, wobei jedoch die Erfassung, dass einer von beiden ausgeklappt ist, ausreicht, um die Vorrichtung zu steuern. Bei dieser Ausführungsform bezeichnet ein erster Bügel vorzugsweise nicht einen spezifischen Bügel, sondern einen beliebigen Bügel der beiden Bügel. Diese Ausführungsform kann dahingehend verstanden werden, dass erfasst wird, ob sich wenigstens ein Bügel in einer ausgeklappten Stellung befindet. Bei dieser Ausführungsform ist es für die Grundsteuerung irrelevant, ob ein (der linke oder der rechte) Bügel als ausgeklappt erfasst wird oder beide Bügel als ausgeklappt erfasst werden (ähnlich einem ODER-Gatter in der Digitallogik ― allerdings keinem Exklusiv-ODER-Gatter bzw. XOR-Gatter). Als beispielhafte Grundfunktion, die realisiert wird, wenn eine ausgeklappte Stellung von wenigstens einem Bügel erfasst wird, kann die tragbare Vorrichtung in einen Einschaltzustand versetzt werden. Diese Ausführungsform ist sehr intuitiv in der Anwendung und im Hinblick auf ein Versagen des Erfassungsmechanismus für einen Bügel, beispielsweise einen defekten Sensor, besonders robust.

Durch das beschriebene Verfahren kann eine sehr einfache Anordnung zur Steuerung von Grundfunktionen eines HMD erstellt werden. Es ist sehr intuitiv in der Anwendung und arbeitet sehr zuverlässig. Die Erfassung der Stellung wenigstens des ersten Bügels kann einfach umgesetzt werden und bietet ein verbessertes Verfahren zum Steuern von Grundfunktionen einer tragbaren Vorrichtung. Ein vorteilhaftes und betriebssicheres Verfahren wird bereitgestellt, wenn das HMD eingeschaltet wird, wenn sich wenigstens der erste Bügel in einer ausgeklappten Stellung befindet. Dass sich wenigstens der erste Bügel in einer ausgeklappten Stellung befindet, stellt eine Voraussetzung dafür dar, dass das HMD getragen werden kann. Somit können Ressourcen, z. B. elektrische Energie, gespart werden, da der Strom nur eingeschaltet wird, wenn die Vorrichtung getragen wird oder getragen werden soll.

Bei einer bevorzugten Ausführungsform der Erfindung umfasst die Erfassung das Erfassen, ob sich wenigstens einer von erstem Bügel und zweitem Bügel in einer ausgeklappten Stellung befindet. Dies bedeutet vorzugsweise, dass die Erfassung, ob sich einer der beiden Bügel in einer ausgeklappten Stellung befindet, ausreicht, um die Grundfunktion zu steuern, so dass sich im Fall, dass beide ausgeklappt sind, im Vergleich zum Fall, dass nur ein Bügel ausgeklappt ist, nichts ändert. Diese Ausführungsform und ihre Vorteile wurden vorstehend beschrieben.

Bei einer weiteren bevorzugten Ausführungsform umfasst die Erfassung das Erfassen, ob sich wenigstens der erste Bügel in einer ausgeklappten Stellung befindet. Für diese Ausführungsform gibt es vorzugsweise zwei Möglichkeiten: eine mögliche Realisierung dieser Ausführungsform umfasst lediglich das Erfassen, ob sich der erste Bügel in einer ausgeklappten Stellung befindet. Dies könnte beispielsweise bedeuten, dass nur erfasst wird, ob sich der linke Bügel in einer ausgeklappten Stellung befindet. Bei der anderen möglichen Realisierung umfasst diese Ausführungsform das Erfassen, ob sich sowohl der erste Bügel als auch der zweite Bügel in einer ausgeklappten Stellung befinden.

Bei einer weiteren bevorzugten Ausführungsform der Erfindung umfasst die Erfassung lediglich das Erfassen, ob sich der erste Bügel in einer ausgeklappten Stellung befindet. Diese Ausführungsform und ihre Vorteile wurden vorstehend beschrieben.

Bei einer weiteren bevorzugten Ausführungsform der Erfindung umfasst die Erfassung das Erfassen, ob sich sowohl der erste Bügel als auch der zweite Bügel in einer ausgeklappten Stellung befinden, vorzugsweise gleichzeitig. Diese Ausführungsform und ihre Vorteile wurden vorstehend beschrieben.

Bei einer bevorzugten Ausführungsform der Erfindung wird das Head-Mounted Display aus der Gruppe ausgewählt, die Datenbrillen, Videobrillen, FPV-Brillen, VR-Headsets, AR-Brillen und/oder Smartglasses umfasst.

Dieses Verfahren eignet sich für diese Arten von HMD besonders gut und stellt ein verbessertes Verfahren zum Steuern einer Grundfunktion dieser HMD-Arten dar.

Bei einer weiteren bevorzugten Ausführungsform der Erfindung umfasst die Grundfunktion eine Steuerung einer Stromversorgung des HMD. Die Steuerung der Stromversorgung umfasst vorzugsweise die Steuerung, ob sich das Gerät in einem Einschaltmodus (oder -zustand) oder in einem Ausschaltmodus (oder-zustand) befindet. Der Ausschaltzustand (-modus) ist vorzugsweise so definiert, dass wenigstens eine Batterie oder eine beliebige andere Quelle elektrischer Energie vom HMD (bzw. dessen Rest) getrennt wird und/oder das System bzw. Gerät heruntergefahren ist. Der Einschaltzustand (-modus) ist vorzugsweise so definiert, dass die wenigstens eine Batterie oder andere Quelle elektrischer Energie mit dem HMD (bzw. dessen Rest) verbunden ist und/oder das System bzw. Gerät bzw. HMD im Regelbetrieb ist. Wenn die Grundfunktion eine Steuerung der Stromversorgung des HMD umfasst, ist dies besonders nützlich und ressourcenfreundlich.

Bei einer weiteren bevorzugten Ausführungsform der Erfindung bewirkt die Erfassung, dass sich wenigstens ein Bügel in einer ausgeklappten Stellung befindet, einen Einschaltmodus des HMD. Dies ist besonders intuitiv, effizient und praktisch.

Bei einer weiteren bevorzugten Ausführungsform der Erfindung umfasst der Sensor einen Schalter, einen elektromagnetischen Sensor, vorzugsweise einen Hall-Sensor und/oder einen kapazitiven Sensor, einen optischen Sensor und/oder einen Beschleunigungsmesser.

Vorzugsweise ist wenigstens ein Sensor erforderlich, um eine Stellung eines einzelnen Bügels zu erfassen.

Ein Sensor, der ausgelegt ist, um zu messen, ob sich wenigstens ein Bügel in einer ausgeklappten Stellung befindet, beschreibt vorzugsweise wenigstens einen Sensor, der ausgelegt ist, um zu messen, ob sich wenigstens ein Bügel in einer ausgeklappten Stellung befindet, oder wenigstens zwei Sensoren, die ausgelegt sind, um zu messen, ob sich wenigstens einer eines ersten Bügels und eines zweiten Bügels in einer ausgeklappten Stellung befindet, oder ausgelegt ist, um zu messen, ob sich beide Bügel (gleichzeitig) in einer ausgeklappten Stellung befinden.

Ein (elektromechanischer) Schalter ist vorzugsweise eine elektrische Komponente, die das Trennen oder Einschalten einer Leiterbahn in einer elektrischen Schaltung ermöglicht.

Vorteilhafterweise kann ein elektrischer Strom unterbrochen und/oder von einem Leiter zu einem anderen umgeleitet werden. Beispielsweise kann ein Schalter elektrische Kontakte umfassen, die wenigstens teilweise beweglich sind und bei denen zwei einander entsprechende Kontaktpaare vorzugsweise mit mehr als einem Teil einer oder mehrerer elektrischer Schaltungen verbunden sind. Dann ist bevorzugt, dass ein Strom zwischen den Teilen fließen kann, wenn sich ein Kontaktpaar berührt, wohingegen kein Strom fließen kann, wenn die Kontakte getrennt sind. Insbesondere kann der Schalter zwischen einer Seite einer Stromversorgung und einer elektrischen Schaltung des zu schaltenden Systems, das seinerseits mit der anderen Seite der Stromversorgung verbunden ist, eingebunden sein. Dann kann ein Schalten vorzugsweise ein Fließen bzw. eine Unterbrechung des Fließens eines elektrischen Stroms in der elektrischen Schaltung des Systems bewirken.

Ein solcher Sensor könnte beispielsweise derart angeordnet sein, dass ein Kontakt eines Kontaktpaares am Gestell der Brille in einem Bereich angebracht ist, in dem der Bügel, dessen Stellung erfasst werden soll, am Gestell angefügt ist, wohingegen der andere Kontakt eines Kontaktpaares am Bügel in einem Bereich, in dem das Gestell am Bügel angefügt ist, angebracht ist. Sie sind vorzugsweise so ausgelegt, dass sie nur dann in Kontakt stehen, wenn sich der Bügel in einer ausgeklappten Stellung befindet, und nicht in Kontakt stehen, wenn sich der Bügel nicht in einer ausgeklappten Stellung, insbesondere in einer eingeklappten Stellung, befindet. Der am Bügel angebrachte Kontakt kann beispielsweise mit der Stromversorgung des HMD elektrisch verbunden sein, während der andere Kontakt des Kontaktpaares mit der Funktionseinheit des HMD elektrisch verbunden ist. Dann wird beispielsweise nur wenn sich der Bügel, dessen Stellung erfasst werden soll, in einer ausgeklappten Stellung befindet, eine elektrische Verbindung zwischen Stromversorgung und Funktionseinheit und/oder einer Steuereinheit (Elektronik) des HMD hergestellt, was ermöglicht, dass ein elektrischer Strom fließt und die Funktionseinheit und/oder Steuereinheit mit elektrischem Strom versorgt.

Fachleuten ist offensichtlich, dass eine Beschreibung hinsichtlich eines von beiden Bügeln, z. B. eines ersten Bügels, hinsichtlich einer Erfassung, ob sich ein zweiter Bügel in einer ausgeklappten Stellung befindet, entsprechend gelten würde.

Ein Schalter ist eine sehr einfache und kostenbewusste Lösung. Ein besonderer Vorteil des Schalters gegenüber anderen Sensoren besteht in seiner doppelten Funktionalität als sowohl Sensor als auch elektrischer Schalter in einem. Während andere Sensoren z. B. bei Erfassung einen Schalter aktivieren würden, ist dies beim Schalter vorteilhafterweise nicht notwendig. Daher ist beispielsweise für eine Funktion als Sensor keine dauerhafte Versorgung mit elektrischer Energie erforderlich, und es müssen keine regelmäßigen Messungen durchgeführt werden.

Ein elektromagnetischer Sensor kann ein resistiver Sensor, insbesondere ein Dehnungsmessstreifen oder ein Potentiometer, sein, der ausgelegt ist, um zu messen, ob sich wenigstens ein Bügel in einer ausgeklappten Stellung befindet. Fachleute wissen, wie die Fähigkeiten eines resistiven Sensors einzusetzen sind, um eine ausgeklappte Stellung von wenigstens einem Bügel zu messen. Ein resistiver Sensor ist sehr robust.

Ein elektromagnetischer Sensor kann ein kapazitiver Sensor sein, der ausgelegt ist, um zu messen, ob sich wenigstens ein Bügel in einer ausgeklappten Stellung befindet. Fachleute wissen, wie die Fähigkeiten eines kapazitiven Sensors einzusetzen sind, um eine ausgeklappte Stellung von wenigstens einem Bügel zu messen. Beispielsweise kann eine Elektrode am Gestell der Brille in einem Bereich angebracht sein, in dem der Bügel, dessen Stellung erfasst werden soll, am Gestell angefügt ist, wohingegen eine zweite Elektrode am Bügel in einem Bereich, in dem das Gestell am Bügel angefügt ist, angebracht ist. Dabei weist eine eingeklappte Stellung des Bügels eine andere Kapazität, die von den Elektroden gemessen wird, als eine ausgeklappte Stellung auf, so dass eine Unterscheidung zwischen beiden Stellungen möglich ist. Ein kapazitiver Sensor weist einen sehr geringen Energieverbrauch auf und ist sehr zuverlässig.

Ein elektromagnetischer Sensor kann ein piezoelektrischer Sensor sein, der ausgelegt ist, um zu messen, ob sich wenigstens ein Bügel in einer ausgeklappten Stellung befindet. Fachleute wissen, wie die Fähigkeiten eines piezoelektrischen Sensors einzusetzen sind, um eine ausgeklappte Stellung von wenigstens einem Bügel zu messen. Ein piezoelektrischer Sensor ist sehr genau und effizient.

Ein elektromagnetischer Sensor kann ein induktiver Sensor, insbesondere ein Differentialtransformator, ein induktiver Wegaufnehmer, ein induktiver Näherungssensor und/oder ein Wirbelstromsensor sein. Der induktive Sensor ist vorzugsweise ausgelegt, um zu messen, ob sich wenigstens ein Bügel in einer ausgeklappten Stellung befindet. Fachleute wissen, wie die Fähigkeiten eines induktiven Sensors einzusetzen sind, um eine ausgeklappte Stellung von wenigstens einem Bügel zu messen. Ein induktiver Sensor ermöglicht eine verbesserte Erfassung und hohe Flexibilität im Hinblick auf den spezifischen Sensortyp.

Ein elektromagnetischer Sensor kann ein Magnetsensor, insbesondere ein Hall-Sensor, sein. Ein Hall-Sensor oder auch Halleffekt-Sensor ist vorzugsweise eine Vorrichtung, die verwendet wird, um die Stärke eines Magnetfeldes auf Grundlage des Halleffekts zu messen. Halleffekt-Sensoren können vorteilhafterweise für Näherungserkennung, Positionserkennung und/oder Geschwindigkeitserkennung verwendet werden. Beispielsweise kann ein Magnet am Gestell der Brille in einem Bereich angebracht sein, in dem der Bügel, dessen Stellung erfasst werden soll, am Gestell angefügt ist, wohingegen der eigentliche Sensor am Bügel angebracht ist, oder umgekehrt. Eine jeweilige Bewegung und/oder Stellung eines Bügels zum Gestell kann dann durch eine vom Sensor erfasste Änderung und/oder einen vom Sensor erfassten Unterschied des Magnetfeldes unterschieden werden. Ein Magnetsensor ist sehr effizient, verwendet bewährte Technologie und ist für eine Massenherstellung geeignet.

Der Sensor kann ein optischer Sensor, z. B. eine Lichtschranke, und/oder ein Sensor für eine elektro-optische Entfernungsmessung sein. Ein Sensor für eine elektro-optische Entfernungsmessung kann insbesondere ein Sensor für eine optische Laufzeitmessung und/oder eine interferometrische Messung sein. Der optische Sensor ist vorzugsweise ausgelegt, um zu messen, ob sich wenigstens ein Bügel in einer ausgeklappten Stellung befindet. Fachleute wissen, wie die Fähigkeiten eines optischen Sensors einzusetzen sind, um eine ausgeklappte Stellung von wenigstens einem Bügel zu messen. Ein optischer Sensor ist sehr robust und wartungsarm.

Der Sensor kann ein Beschleunigungsmesser sein. Ein Beschleunigungsmesser misst vorzugsweise die relative Beschleunigung, die er selbst in Bezug auf ein Inertialsystem oder ein System, das näherungsweise ein Inertialsystem darstellt, wie beispielsweise die Erdoberfläche, erfährt. Eine Beschleunigung kann eine lineare Beschleunigung und/oder eine Rotationsbeschleunigung umfassen. Ein Beschleunigungsmesser kann z. B. elektrisch, piezoelektrisch, piezoresistiv, auf Magnetinduktion basierend und/oder kapazitiv sein. Er kann insbesondere ein mikro-elektro-mechanisches System (MEMS) oder ein Dehnungsmessstreifen sein. Durch Messung von beispielsweise der Beschleunigung von wenigstens einem Bügel bezogen auf das Gestell kann vorzugsweise eine Stellung des Bügels bezogen auf das Gestell abgeleitet werden. Vorzugsweise könnten zwei Beschleunigungsmesser eingesetzt werden, einer, der im Gestell enthalten ist, und einer, der in wenigstens einem Bügel enthalten ist, was vorteilhafterweise ermöglicht, dass die relative Stellung (und/oder eine Änderung der Stellung) des Bügels bezogen auf das Gestell durch eine Differentialmessung zwischen den beiden Sensoren abgeleitet wird. Ein Beschleunigungsmesser verbessert die Erfassung. Zudem können Beschleunigungsmesser vorteilhafterweise für weitere Anwendungen/Funktionen des HMD eingesetzt werden.

Ein Sensor kann vorzugsweise eine dauerhafte Messung durchführen. Eine dauerhafte Messung kann eine fortlaufende Ausgabe der Messdaten durch den Sensor umfassen. Eine dauerhafte Messung kann zudem eine Zeitreihe von Messdaten, die vom Sensor, beispielsweise in festgelegten Zeitintervallen, generiert werden, umfassen.

Ein Sensor kann eine Steuereinheit, z. B. eine integrierte Schaltung, insbesondere einen Mikroprozessor und/oder eine Mikroprozessoreinheit (MCU), umfassen, die ausgelegt ist, um durch eine angemessene Analyse der vom Sensor generierten Daten die Erfassung durchzuführen, ob sich wenigstens der erste Bügel in einer ausgeklappten Stellung befindet.

Die integrierte Schaltung kann vorzugsweise auch ausgelegt sein, um in Hinblick auf das HMD weitere Funktionen umzusetzen, sie kann z. B. eine Steuereinheit des HMD sein.

Ein Sensor kann vorzugsweise auch ausgelegt sein, um nur dann, wenn eine relevante Änderung der Stellung des wenigstens ersten Bügels bezogen auf das Gestell erfolgt, zu erfassen, eine Messung durchzuführen und/oder Messdaten bereitzustellen. Die Funktion des Schalters kann z. B. auf diese Weise interpretiert werden. Einige einfache Kapazitivsensoranordnungen können zudem eine elektrische Spannung nur dann ausgeben, wenn eine Änderung der Kapazität aufgrund einer Änderung der Stellung erfolgt. Diese Sensortypen weisen vorteilhafterweise einen sehr geringen Energieverbrauch auf und können vorteilhafterweise auch dann funktionieren, wenn sich das HMD und/oder alle seiner Komponenten in einem Ausschaltmodus befinden.

Es wird bevorzugt, dass der Sensor und/oder die integrierte Schaltung unabhängig vom Rest des HMD mit elektrischer Energie versorgt werden können. Es kann insbesondere bevorzugt sein, dass der Sensor und/oder die integrierte Schaltung unabhängig von der Steuerung der Stromversorgung mit elektrischer Energie versorgt werden können. Dies ist beispielsweise dann nützlich, wenn die Erfassung nur ausgeführt werden kann, wenn der Sensor und/oder die integrierte Schaltung mit elektrischer Energie versorgt werden, weil z.B. eine regelmäßige Messung durch den Sensor vorgenommen wird.

Somit kann bevorzugt sein, dass die Grundfunktion eine Steuerung der Energieverwaltung und/oder eine Stromversorgung, die nicht nur eine Anbindung/Trennung des ganzen HMD an bzw. von elektrischer Energie darstellt, umfasst. Dies umfasst vorzugsweise einen teilweisen Einschalt-/Ausschaltmodus, bei dem die Anbindung/Trennung an bzw. von elektrischer Energie lediglich für einzelne Teile des HMD erfolgt. Diese Teile können insbesondere die visuelle Datenausgabe, beispielsweise eine Anzeigevorrichtung und/oder einen Projektor zum Projizieren von Daten auf (transparente) Gläser des HMD, und/oder die Funktionseinheit umfassen.

Im Gegenteil hierzu kann bevorzugt sein, dass die Versorgung des Sensors und/oder der integrierten Schaltung des HMD mit elektrischer Energie nicht unabhängig vom Leistungsmodus des Rests der Vorrichtung erfolgt, wenn der Sensor einen (elektromechanischen) Schalter (siehe oben) umfasst, da das "Erfassungsschema" des Schalters im Wesentlichen keine elektrische Energie erfordert/verbraucht und daher nicht auf eine unabhängige Stromversorgung angewiesen ist.

Es kann bevorzugt sein, dass die Grundfunktion eine Steuerung einer Energieverwaltungsfunktion umfasst. Eine Energieverwaltungsfunktion kann insbesondere die Steuerung eines Zustands mit geringem Stromverbrauch bzw. eines Standby-Modus umfassen. Daher umfasst, wenn eine Steuerung einer Grundfunktion eine Energieverwaltungsfunktion umfasst, diese insbesondere eine Steuerung, ob sich das HMD in einem Einschaltzustand befindet oder ob es sich in einem Zustand mit geringem Stromverbrauch bzw. einem Standby-Modus befindet.

Vorzugsweise ermöglicht die Ein-/Ausschaltstellung von Bügel/Scharnier, zusätzlich zur Anbindung an/Trennung von einer Stromversorgung und/oder wenigstens einer Batterie die Steuerung des Ein-/Ausschaltens des Systems, indem die Bügel-/Scharnier-Information eine Stromversorgung des Systems oder eines Teils des Systems direkt leitet (EIN/AUS) oder durch die integrierte Schaltung/MCU, die die Bügel-/Scharnier-Ein-/Aus-Information verwendet, um die Stromversorgung zu steuern oder das System in einen Ausschaltzustand oder einen sonstigen Zustand mit geringem Stromverbrauch zu versetzen, indirekt leitet.

Es kann weiterhin bevorzugt sein, dass während eine Grundfunktion eine Anbindung/Trennung des HMD oder Teilen desselben an die / von der Stromversorgung umfassen kann, gleichzeitig eine Anbindung der Stromversorgung an eine externe Stromversorgung, z. B. zum elektrischen Laden der Stromversorgung des HMD, bestehen kann. Dies kann insbesondere durch die integrierte Schaltung gesteuert werden. Wenn die Grundfunktion während eines solchen Zustands durch die Bügelstellung gesteuert wird, kann das System dennoch ein- und ausgeschaltet werden. Der Strom kann dann von der Stromversorgung des HMD und/oder der externen Stromversorgung bezogen werden. In einigen Fällen kann jedoch auch bevorzugt sein, dass eine Steuerung einer Grundfunktion in einem solchen Ladezustand der Stromversorgung nicht möglich ist.

Die Grundfunktion kann vorzugsweise eine Anbindung/Trennung der Batterie an das / vom System (z. B. dem HMD) auf Grundlage von Bügel-/Scharnierstellungen umfassen. In manchen Fällen können die integrierte Schaltung oder die MCU diesen Ein-/Ausschalter durch eine separate Steuerleitung außer Kraft setzen und die Batterie an das System anbinden, auch wenn sich Bügel/Scharnier in "AUS"-Stellung befinden. Dies kann beispielsweise beim Laden der Brille, wenn sie sich in einem Etui befindet oder wenn sie sich nicht in einem Etui befindet, der Fall sein. Beispielsweise ist die Bügel-/Scharnierstellung der Brille üblicherweise "AUS", wenn sie sich in einem Etui befindet. Eine externe Stromversorgung kann durch eine Ladeschnittstelle bereitgestellt werden und aktiviert die integrierte Schaltung/MCU, wenn die Batterie noch nicht an das System angebunden ist. Mittels dieser Information kann die integrierte Schaltung/MCU einen Ein-/Ausschalter parallel zum Anbinden der Batterie an das System steuern und somit das Laden ermöglichen. Wird eine externe Stromversorgung entfernt, erfasst die integrierte Schaltung/MCU die Bügel-/Scharnierstellung und steuert nun das Ein- und Ausschalten des Systems ausschließlich über die Bügel-/Scharnierinformation.

Bei einer weiteren bevorzugten Ausführungsform der Erfindung umfasst die Erfassung das Messen eines relativen Winkels, eines relativen Schwellenwinkels, einer relativen Stellung, einer relativen Schwellenstellung und/oder einer relativen Bewegung von wenigstens einem Bügel.

Ein relativer Winkel kann beispielsweise durch einen Inkrementalgeber gemessen werden, der z. B. wenigstens einen der Sensoren wie hierin vorgesehen verwendet. Er kann zudem durch andere Anordnungen, die Sensoren wie hierin vorgesehen einsetzen, gemessen werden.

Als typische Umsetzung kann ein Schwellenwinkel, der den relativen Winkel zwischen dem Bügel und dem Gestell betrifft, bestehen. Der Schwellenwinkel kann ein beliebiger Winkel zwischen dem kleinsten Winkel, wenn sich der Bügel in einer eingeklappten Stellung befindet, und dem größten Winkel, wenn sich der Bügel in einer ausgeklappten Stellung befindet, sein. Als sinnhaltiges Beispiel kann der Winkel größer als 45 °, beispielsweise 50 °, 60 °, 70 ° oder 80 °, sein. Es kann ein Winkel sein, der etwas kleiner, beispielsweise 5 ° kleiner oder 10 °kleiner, als der größte Winkel ist, wenn der Bügel ausgeklappt ist. Der Schwellenwinkel stellt dann vorzugsweise einen Übergangspunkt für die zu steuernde Grundfunktion dar, so dass beispielsweise die Grundfunktion umgeschaltet wird, wenn der Schwellenwinkel aus einem kleineren Winkel bzw. einem größeren Winkel durchlaufen wird. Ist beispielsweise der von dem wenigstens einen Sensor gemessene Winkel größer als der Schwellenwinkel, wird die Stromversorgung des HMD eingeschaltet, wohingegen die Stromversorgung des HMD ausgeschaltet wird, wenn der Winkel kleiner als der Schwellenwinkel ist. Eine solche Messung kann vorzugsweise auch dadurch realisiert werden, dass lediglich gemessen wird, ob ein Schwellenwinkel über- oder unterschritten ist, ohne dass eine genaue Messung des Winkels selbst erfolgt.

In ähnlicher Weise kann eine Schwellenstellung von wenigstens einem Bügel wie vorstehend beschrieben gemessen werden.

Für Fachleute ist offensichtlich, wie die vorstehend beschriebenen Variablen gemessen werden können, indem beispielsweise wenigstens ein Sensor wie innerhalb dieses Dokuments dargelegt verwendet wird. Für Fachleute ist ebenfalls offensichtlich, dass all diese Variablen vorzugsweise verwendet werden können, um zu erfassen, ob sich wenigstens ein Bügel in einer ausgeklappten Stellung befindet.

Eine Bewegung kann vorzugsweise durch eine Inertialsensoreinheit und/oder einen Beschleunigungsmesser gemessen werden.

Eine Messung eines relativen Winkels, eines relativen Schwellenwinkels, einer relativen Stellung, einer relativen Schwellenstellung und/oder einer relativen Bewegung von wenigstens einem Bügel ermöglicht vorteilhafterweise eine verbesserte Erfassung, ob sich wenigstens ein Bügel in einer ausgeklappten Stellung befindet, und ein verbessertes Verfahren für eine Grundsteuerung eines HMD.

In einem zweiten Aspekt betrifft die Erfindung ein HMD, vorzugsweise zum Durchführen eines Verfahrens wie innerhalb dieses Dokuments beschrieben. Die Vorrichtung umfasst einen Brillenrahmen, der seinerseits ein Brillengestell und zwei klappbare Bügel umfasst. Zudem umfasst das HMD wenigstens einen Sensor. Der Brillenrahmen ist vorzugsweise für eine wenigstens vorübergehende Befestigung des HMD an einem Körper (Kopf) eines Benutzers ausgelegt. Vorzugsweise sind eine Funktionseinheit und/oder eine visuelle Datenausgabe ebenfalls umfasst und am Gestell angebracht. Der Sensor und der Brillenrahmen sind für eine Erfassung, ob sich wenigstens ein Bügel in einer ausgeklappten Stellung befindet, und eine Steuerung einer Grundfunktion des Head-Mounted Displays abhängig von der Erfassung ausgelegt.

Fachleute wissen, dass Vorteile, Definitionen und Ausführungsformen des Verfahrens nach der Erfindung auch auf die Vorrichtung nach der Erfindung anwendbar sind.

Bei einer bevorzugten Ausführungsform der Erfindung wird das Head-Mounted Display aus der Gruppe ausgewählt, die Datenbrillen, Videobrillen, FPV-Brillen, VR-Headsets, AR-Brillen und/oder Smartglasses umfasst.

Bei einer weiteren bevorzugten Ausführungsform der Erfindung umfasst der Sensor einen Schalter, einen elektromagnetischen Sensor, vorzugsweise einen Hall-Sensor, und/oder einen kapazitiven Sensor, einen optischen Sensor und/oder einen Beschleunigungsmesser, wobei der Sensor ausgelegt ist, um einen relativen Winkel, einen relativen Schwellenwinkel, eine relative Stellung, eine relative Schwellenstellung und/oder eine relative Bewegung von wenigstens einem Bügel bezogen auf das Gestell zu messen.

Bei einer weiteren bevorzugten Ausführungsform der Erfindung umfasst die Vorrichtung eine Stromversorgung, vorzugsweise eine Batterie, wobei Stromversorgung und Sensor für eine Steuerung der Stromversorgung (Zuführen von elektrischem Strom) des HMD ausgelegt sind.

### Ausführliche Beschreibung der Erfindung:

Nachstehend wird die Erfindung bezugnehmend auf beispielhafte Ausführungsformen und Figuren ausführlicher beschrieben, ohne dass dies als einschränkend anzusehen ist.
**Figur 1** zeigt eine beispielhafte Datenbrille in einem Ausschaltmodus.
**Figur 2** zeigt eine beispielhafte Datenbrille in einem Einschaltmodus.

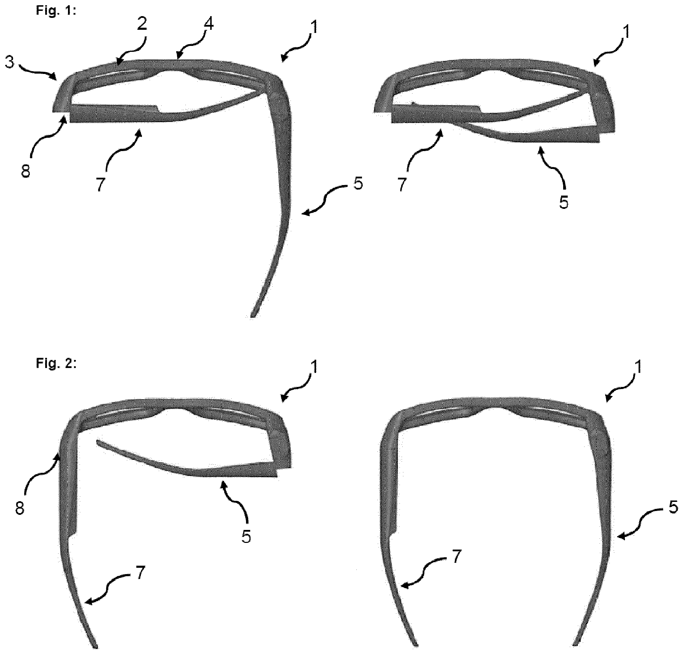

**Figur 1** und **Figur 2** zeigen ein HMD 1 in Form einer Datenbrille 1 in Draufsicht. Bei dieser beispielhaften Ausführungsform umfasst die Datenbrille 1 einen Brillenrahmen 3 mit einem Gestell **4,** an dem transparente Brillengläser angebracht sind. Die Brillengläser dienen gleichzeitig als visuelle Datenausgabe 2. Der Brillenrahmen umfasst weiterhin klappbare Bügel, einen links 7 und einen rechts 5. Bei der dargestellten Ausführungsform wird die Erfassung einer ausgeklappten Stellung von wenigstens einem Bügel durch die Erfassung einer ausgeklappten Stellung von genau einem Bügel, dem ersten Bügel, des Brillenrahmens 3 realisiert. In diesem Fall ist dies der linke Bügel 7. Nur die ausgeklappte Stellung des linken Bügels 7 führt zur Steuerung der Grundfunktion der Datenbrille 1. Hierbei ist die Grundfunktion ein Einschaltmodus. Somit führt bei dieser Ausführungsform nur der linke Bügel 7 in einer ausgeklappten Stellung zu einem Einschaltmodus. Die Stellung des linken Bügels 7 (ausgeklappt oder eingeklappt) kann durch einen Sensor 8 erfasst werden (hier ist der Sensor nicht explizit darstellt, sondern nur eine typische Position eines solchen Sensor gezeigt), der in einem Bereich platziert ist, in dem der linke Bügel 7 mittels Scharnier am Gestell 4 befestigt ist.

Somit zeigt **Figur 1** zeigt die Datenbrille 1 in einem Ausschaltmodus. Es gibt zwei Realisierungen der Bügelstellungen der gezeigten Ausführungsform in einem Ausschaltmodus, eine auf der linken Seite von Figur 1 und eine auf der rechten Seite. Wie auf der linken Seite gezeigt befindet sich der linke Bügel 7 in einem eingeklappten Zustand bzw. einer eingeklappten Stellung, und der rechte Bügel 5 befindet sich in einem ausgeklappten Zustand bzw. einer ausgeklappten Stellung. Auf der rechten Seite von Figur 1 befinden sich sowohl der linke 7 als auch der rechte Bügel 9 in einer eingeklappten Stellung. Der Strom wird unabhängig von der Stellung des rechten Bügels 5 abgeschaltet, da in beiden Fällen der linke Bügel 7 eingeklappt ist.

**Figur 2** zeigt die Datenbrille 1 in einem Einschaltmodus. Beide Realisierungen, auf der linken Seite und der rechten Seite, zeigen einen ausgeklappten linken Bügel 7. Während sich der rechte Bügel 5 auf der linken Seite in einer eingeklappten Stellung befindet, befinden sich auf der rechten Seite sowohl linker 7 als auch rechter Bügel 5 in einer ausgeklappten Stellung, so dass die Datenbrille 1 für ein Tragen durch den Benutzer bereit ist. Somit ist ersichtlich, dass obwohl nur die Erkennung des Zustands des linken Bügels 7 für die Steuerung des Leistungsmodus ausschlaggebend ist, trotzdem sichergestellt werden kann, dass der Strom immer eingeschaltet ist, wenn die Datenbrille 1 für ein Tragen bereit ist und sowohl linker 7 als auch rechter Bügel 5 ausgeklappt sind. Auf diese Weise kann auf weitere Komponenten zur Erfassung der Stellung des rechten Bügels 5 verzichtet werden, während gleichzeitig die gewünschte Funktionalität eines Grundsteuerungsmechanismus, der nützlich, intuitiv und ressourcenfreundlich ist, gegeben ist.

### BEZUGSZEICHEN

- 1: HMD, z. B. Datenbrille
- 2: Visuelle Datenausgabe
- 3: Brillenrahmen
- 4: Gestell des Brillenrahmens
- 5: Zweiter Bügel, z. B. rechter Bügel
- 7: Erster Bügel, z. B. linker Bügel
- 8: Sensor

## Patentansprüche

1. Verfahren zum Steuern einer Grundfunktion eines Head-Mounted Display (1), das Folgendes einschließt:
- einen Brillenrahmen (3), der über ein Gestell (4) und zwei klappbare Bügel (7, 5) verfügt,
die folgenden Schritte umfassend:
- Erfassung, durch wenigstens einen Sensor (8), ob sich wenigstens ein Bügel in einer ausgeklappten Stellung befindet
- Steuerung der Grundfunktion des Head-Mounted Display (1) in Abhängigkeit von der Erfassung.

2. Verfahren nach Anspruch 1, wobei die Erfassung das Erfassen, ob sich wenigstens einer eines ersten Bügels (7) und eines zweiten Bügels (5) in einer ausgeklappten Stellung befindet, umfasst.

3. Verfahren nach Anspruch 1, wobei die Erfassung das Erfassen, ob sich wenigstens der erste Bügel (7) in einer ausgeklappten Stellung befindet, umfasst.

4. Verfahren nach dem vorhergehenden Anspruch, wobei die Erfassung ausschließlich das Erfassen, ob sich der erste Bügel (7) in einer ausgeklappten Stellung befindet, umfasst

5. Verfahren nach Anspruch 3, wobei die Erfassung das Erfassen, ob sich sowohl der erste Bügel (7) als auch der zweite Bügel (5) in einer ausgeklappten Stellung befinden, umfasst.

6. Verfahren nach einem oder mehreren der vorhergehenden Ansprüche,
wobei die Grundfunktion eine Steuerung einer Stromversorgung des Head-Mounted Display (1) umfasst, und
wobei die Erfassung, dass sich wenigstens ein Bügel in einer ausgeklappten Stellung befindet, vorzugsweise einen Einschaltmodus des Head-Mounted Display (1) bewirkt.

7. Verfahren nach einem oder mehreren der vorhergehenden Ansprüche,
wobei der Sensor (8) einen Schalter,
einen elektromagnetischen Sensor, vorzugsweise einen Hall-Sensor und/oder einen kapazitiven Sensor,
einen optischen Sensor und/oder
einen Beschleunigungsmesser umfasst und
wobei die Erfassung vorzugsweise ein Messen eines relativen Winkels, eines relativen Schwellenwinkels, einer relativen Stellung, einer relativen Schwellenstellung und/oder einer relativen Bewegung von wenigstens einem Bügel bezogen auf das Gestell (4) umfasst.

8. Head-Mounted Display (1), vorzugsweise zum Durchführen eines Verfahrens nach einem oder mehreren der vorhergehenden Ansprüche 1-7, umfassend:
- einen Brillenrahmen (3), der über ein Gestell (4) und zwei klappbare Bügel (7, 5) verfügt,
- wenigstens einen Sensor (8),
**dadurch gekennzeichnet, dass**
der Sensor (8) und der Brillenrahmen (3) für eine Erfassung, ob sich wenigstens ein Bügel in einer ausgeklappten Stellung befindet, und
eine Steuerung einer Grundfunktion des Head-Mounted Display (1) in Abhängigkeit von der Erfassung ausgelegt sind.

9. Head-Mounted Display (1) nach dem vorhergehenden Anspruch,
**dadurch gekennzeichnet, dass**
das Head-Mounted Display (1) aus der Gruppe ausgewählt wird, die Datenbrillen, Videobrillen, FPV-Brillen, VR-Headsets, AR-Brillen und/oder Smartglasses umfasst.

10. Head-Mounted Display (1) nach einem der vorhergehenden Ansprüche 8 oder 9,
**dadurch gekennzeichnet, dass**
der Sensor (8) einen Schalter,
einen elektromagnetischen Sensor, vorzugsweise einen Hall-Sensor und/oder einen kapazitiven Sensor,
einen optischen Sensor und/oder
einen Beschleunigungsmesser umfasst,
wobei der Sensor (8) ausgelegt ist, um einen relativen Winkel, einen relativen Schwellenwinkel, eine relative Stellung, eine relative Schwellenstellung und/oder eine relative Bewegung von wenigstens einem Bügel bezogen auf das Gestell (4) zu messen.

11. Head-Mounted Display (1) nach einem oder mehreren der vorhergehenden Ansprüche 8-10, **dadurch gekennzeichnet, dass**
es eine Stromversorgung, vorzugsweise eine Batterie, umfasst,
wobei Stromversorgung und Sensor für eine Steuerung der Stromversorgung des Head-Mounted Display (1) ausgelegt sind.
